# EUROPÄISCHE PATENTSCHRIFT

(11) **EP 3 104 330 B1**
(45) Veröffentlichungstag und Bekanntmachung des Hinweises auf die Patenterteilung: **20.02.2019**
(21) Anmeldenummer: 16173476.9
(22) Anmeldetag: 08.06.2016
(51) Int. Cl.: G06T 7/20, H04N 5/272

(54) **VERFAHREN ZUM NACHVERFOLGEN ZUMINDEST EINES OBJEKTES UND VERFAHREN ZUM ERSETZEN ZUMINDEST EINES OBJEKTES DURCH EIN VIRTUELLES OBJEKT IN EINEM VON EINER KAMERA AUFGENOMMENEN BEWEGTBILDSIGNAL**
METHODS FOR TRACKING AT LEAST ONE OBJECT AND METHOD FOR REPLACING AT LEAST ONE OBJECT WITH A VIRTUAL OBJECT IN A MOTION PICTURE SIGNAL RECORDED BY A CAMERA
PROCEDE DE SUIVI D'AU MOINS UN OBJET ET PROCEDE DE REMPLACEMENT D'AU MOINS UN OBJET PAR UN OBJET VIRTUEL DANS UN SIGNAL D'IMAGE ANIMEE ENREGISTRE PAR UNE CAMERA

(30) Priorität: 09.06.2015 EP 15171207
(43) Veröffentlichungstag der Anmeldung: 14.12.2016
(73) Patentinhaber: Fraunhofer-Gesellschaft zur Förderung der angewandten Forschung e.V., 80686 München (DE)
(72) Erfinder: Vonolfen, Wolfgang, 53225 Bonn (DE)
(74) Vertreter: Pfenning, Meinig & Partner mbB

(56) Entgegenhaltungen:
- WO-A1-97/09823
- GB-A- 2 502 986
- US-A- 6 141 060
- YONG-SHENG CHEN ET AL: "Camera calibration with a motorized zoom lens", PROCEEDINGS / 15TH INTERNATIONAL CONFERENCE ON PATTERN RECOGNITION : BARCELONA, SPAIN, SEPTEMBER 3 - 7, 2000; [PROCEEDINGS OF THE INTERNATIONAL CONFERENCE ON PATTERN RECOGNITION. (ICPR)], IEEE COMPUTER SOCIETY, LOS ALAMITOS, CALIF. [U.A.], Bd. 4, 3. September 2000 (2000-09-03), Seiten 495-498, XP010533126, DOI: 10.1109/ICPR.2000.902965 ISBN: 978-0-7695-0750-7

## Beschreibung

Die Erfindung betrifft ein Verfahren zum Nachverfolgen zumindest eines Objektes in einem von einer Kamera aufgenommenen Bewegtbildsignal. Dabei wird in einem Kalibrierschritt zunächst zumindest ein Merkmal des Objektes im von der Kamera aufgenommenen Bewegtbild detektiert und die Position dieses Merkmals für verschiedene Zustände der Kamera, beispielsweise verschiedene Ausrichtungen, in einem Zuordnungsspeicher gespeichert. In einem Nachverfolgungsschritt kann dann anhand des Kamerazustandes aus dem Zuordnungsspeicher die Position des Objektes ausgelesen werden, so dass eine zuverlässigere Verfolgung des Objektes möglich wird. Erfindungsgemäß wird außerdem ein Verfahren angegeben, in dem das auf diese Weise nachverfolgte Objekt durch ein virtuelles Objekt im Bewegtbild ersetzt wird.

Die erfindungsgemäßen Verfahren und die erfindungsgemäße Vorrichtung schließen die Lücke zwischen sensorbasierten Messverfahren für die Kameraperspektive, welche je nach Ausführung und Ausrüstung nur eine bestimmte Genauigkeit erreichen, und dem gewünschten Ziel, grafische Objekte in ein Kamerabild pixelgenau oder sogar subpixelgenau zu platzieren, ohne dass die Ungenauigkeiten des jeweiligen Kamera-Tracking-Systems im gemischten Bild sichtbar werden. Ein besonderes Merkmal ist die Unabhängigkeit von dem zu Grunde liegenden Kamera-Tracking-System, solange alle Kamerabewegungen daraus rekonstruierbar sind.

Für die Platzierung von virtuellen Objekten in einem laufenden Video, welches auf den Aufnahmen einer bewegten Kamera beruht, sind Verfahren erforderlich, die für jedes Videobild die aktuelle Kameraperspektive berechnen und an den Grafikcomputer übermitteln. Hierfür wird zumeist ein Modell des realen Kameraverhaltens entwickelt, welches sich durch Messung von angebrachten Sensoren oder dem Kamerabild selbst berechnen lässt. Unter Zugrundelegung eines Koordinatensystems wird das Modell für gewöhnlich beschrieben durch Parameter für
- Die Kameraposition im Raum: x,y,z. Sofern die Kamera nicht mobil ist, sind die Werte statisch
- Die Kameraorientierung im Raum: pan, tilt, roll (Schwenk, Neigung, seitliches Kippen)
- Die Objektiveigenschaften: zoom, focus, lens distortion (Linsenverzeichnung), depth of field (Tiefenschärfe)
- Die Kameramontage: nodal point offset (Versatz der optischen Achse relativ zum letzten Gelenk), optical center shift (Versatz der optischen Achse zum Kamerabildsensor)

Einzelne Parameterkombinationen wie Position und Orientierung können auch zusammengefasst werden, beispielsweise in Form einer Positionsmatrix. Dies ändert allerdings nichts an der Erfordernis und der Rekonstruierbarkeit jedes einzelnen Parameters. Je nach Ausführung des Kameratyps oder der Kamerastative (Pedestal, Kran, Steadycam) ist die Erfassung der einzelnen Parameter unterschiedlich. Bisherige Entwicklungen unterscheiden sich daher in der Art und Kombination von Sensoren, um die Kameraparameter zu erfassen.
Im einfachsten Fall werden wie bei US 2014/0313405 A1 an allen mechanischen Gelenken Inkrementalsensoren angebracht und deren Werte in Relation zu physikalischen Größen (z.B. Sensor-Schritte zu Winkel oder Distanz) gesetzt. Objektiveigenschaften wie auch die Kameramontage werden dann einmalig vermessen und bei der Aufnahme entsprechend berücksichtigt. Entsprechende Methoden zur Berechnung der Kameraposition aus Messwerten sind aus JP 2011077780 A und EP 1209902 A1 bekannt.
In WO 98/43414, WO 98/34410, WO 97109830, WO 97109823 wird ein vorher bekanntes Muster in der Szene mit seiner im Kamerabild entstehenden perspektivischen Verzeichnung zur Ermittlung der Kameraperspektive herangezogen.
In WO 99/43150 wird ein an der Kamera montiertes Infrarot-Target zur Erfassung der Position und Orientierung der Kamera verwendet. Die Erfassung der Objektiveigenschaften und der Kameramontage erfolgt dann in gleicher Weise wie zuvor.
In WO 2013/167901 erfasst eine an der Kamera montierte Stereokamera reale Szenenmerkmale im dreidimensionalen Raum, um die Position und Orientierung Bildweise zu bestimmen.
In WO 2014/020108 erfasst eine zusätzlich montiere Weitwinkelkamera die reale Szene zweidimensional, wodurch eine Voraborientierung gewährleistet ist. Die genaue Berechnung erfolgt dann über das Bild der aufnehmenden Kamera.

YONG-SHENG CHEN ET AL: "Camera calibration with a motorized zoom lens", PROCEEDINGS / 15TH INTERNATIONAL CONFERENCE ON PATTERN RECOGNITION: BARCELONA, SPAIN; September 3-7; 2000; [PROCEEDINGS OF THE INTERNATIONAL CONFERENCE ON PATTERN RECOGNITION. (ICPR)], IEEE COMPUTER SOCIETY, LOS ALAMITOS, CALIF: [U.A.], Bd. 4, 3. September 2000 (2000-09-03), Seiten 495-498, XP010533126, DOI: 10.1109/ ICPR.2000. 902965, ISBN: 978-0-7695-0750-7, beschreibt ein Verfahren zur Kamerakalibrierung mit einem angetriebenen Zoom-Objektiv. Es wird hierbei die Blendeneinstellung fixiert und eine Kamerakalibrierung adaptiv über verschiedene Bereiche von Zoom und Fokuseinstellungen durchgeführt.

In einer Erweiterung zu sogenannten hybriden System können weitere Sensoren wie Gyroskope, Beschleunigungs-, Gravitations- oder Magnetfeldsensoren für eine Unterstützung der Messung sorgen. Ebenso kann das Kamerabild selbst herangezogen werden, um eine möglichst genaue Platzierung von graphischen Objekten in der Szene zu erreichen.

Allen Verfahren ist gemeinsam, dass sie eine festgelegte Kombination von Sensoren verwenden und allenfalls mittels Bildverarbeitung aus dem Kamerabild eine dafür abgestimmte Feinanpassung vornehmen. In WO 2014/020108 und WO 2013/186278 A1 werden in der Szene Marker explizit platziert und dann im Kamerabild erfasst. Je nach Ausprägung erreicht man einen unterschiedlichen Freiheitsgrad für die Kamera sowie eine unterschiedliche Genauigkeit für die einzelnen Kameraparameter. In der Praxis hat sich jedoch gezeigt, dass nach dem Stand der Technik ein pixelgenaues Ersetzen eines Objektes im Kamerabild durch ein virtuelles Objekt nicht mit der nötigen Zuverlässigkeit erreicht wird.
Aufgabe der vorliegenden Erfindung ist es, eine Nachverfolgung eines Objektes und eine Ersetzung eines Objektes durch ein virtuelles Objekt mit höherer Genauigkeit zu ermöglichen.
Die Aufgabe wird gelöst durch das Verfahren zum Nachverfolgen zumindest eines Objektes in einem von einer Kamera aufgenommenen Bewegtbildsignal nach Anspruch 1 und die Bildverarbeitungsvorrichtung nach Anspruch 13. Die abhängigen Ansprüche geben vorteilhafte Weiterbildungen des erfindungsgemäßen Verfahrens an.
Erfindungsgemäß wird ein Verfahren zum Nachverfolgen zumindest eines Objektes in einem von einer Kamera aufgenommenen Bewegtbildsignal angegeben. Ein Bewegtbildsignal kann beispielsweise ein Videosignal mit einer Vielzahl von zeitlich aufeinander folgenden Frames oder Einzelbildern sein.
Erfindungsgemäß nimmt die Kamera Ausschnitte einer Szenerie auf. Es wird dabei davon ausgegangen, dass das nachzuverfolgende Objekt in den von der Kamera aufgenommenen Ausschnitten zumindest zeitweise zumindest teilweise vorliegt, so dass es von der Kamera erfasst wird. Es ist nicht ausgeschlossen, dass das Objekt zeitweise nicht vollständig im aufgenommenen Ausschnitt vorliegt. Der von der Kamera aufgenommene Ausschnitt kann auch nur einen Teil des Objektes umfassen. Es ist auch möglich, dass das Objekt zeitweise gar nicht im von der Kamera aufgenommenen Ausschnitt vorliegt, beispielsweise wenn die Kamera in eine andere Richtung schwenkt.

Die Kamera erzeugt das Bewegtbildsignal als Abbildung der aufgenommenen Ausschnitte. Die Kamera filmt also den jeweiligen Ausschnitt und erzeugt daraus beispielsweise ein Videosignal als Bewegtbildsignal.

Erfindungsgemäß weist die Kamera zumindest einen Sensor auf, mit dem zumindest eine Eigenschaft eines Zustandes der Kamera, im folgenden als Kamerazustand bezeichnet, bestimmbar ist. Vorzugsweise weist die Kamera eine solche Zahl von Sensoren auf, dass aus den Sensordaten zusammen mit den Spezifikationen der Kamera vollständig bestimmbar ist, wie der aufgenommene Ausschnitt der Szenerie in das Bewegtbildsignal abgebildet wird. Bevorzugt sind also Sensoren vorgesehen, mit denen die Kameraposition im Raum, beispielsweise als X-, Y- und Z-Koordinaten bestimmbar ist. Darüber hinaus sind vorteilhaft Sensoren vorgesehen, mit denen eine Kameraorientierung im Raum bestimmbar ist. Die Kameraorientierung wird üblicherweise als Pan, Tilt und Roll, also Schwenk, Neigung und seitliches Kippen, angegeben. Für jeden dieser Freiheitsgrade kann ein Sensor vorgesehen sein. Darüber hinaus können vorteilhaft Sensoren vorgesehen sein, mit denen Objektiveigenschaften bestimmbar sind, wie beispielsweise eine Brennweite, ein Zoom, ein Focus, eine Linsenverzeichnung (lense distortion) und/oder eine Tiefenschärfe (depth of field). Darüber hinaus können Sensoren vorgesehen sein, die die Kameramontageeigenschaften messen, beispielsweise ein Versatz der optischen Achse relativ zum letzten Gelenk (nodal point offset) und/oder ein Versatz der optischen Achse zum Kamerabildsensor (optical center shift).

Abhängig von der verwendeten Kameramontage kann jede Kombination der vorstehend aufgeführten Sensoren sinnvoll sein. Ist beispielsweise die Kamera fest montiert und nur in einer einzigen Richtung schwenkbar gelagert und sind darüber hinaus die Objektiveigenschaften und die Kameramontage fest vorgegeben, so kann ein einziger Sensor ausreichend sein, mit dem besagte Schwenkbarkeit vermessen wird. Ist andererseits beispielsweise die Kamera fest auf dem Boden montiert und das Objektiv unveränderbar, die Kamera aber um alle drei Achsen schwenkbar, so werden sinnvollerweise drei Sensoren zur Messung der Schwenkung, Neigung und des seitlichen Kippens vorgesehen. Beliebige andere Kombinationen sind möglich. Ist die Kamera im Raum verschiebbar, können Sensoren für die x-, y- und z-Position sinnvoll sein.

Erfindungsgemäß werden mit dem zumindest einen Sensor Werte zumindest einer Eigenschaft eines Kamerazustandes bestimmt. Ist also die Kamera beispielsweise um eine Achse schwenkbar, so ist die Eigenschaft des Kamerazustandes hier die Orientierung der Kamera um diese Achse und die vom Sensor aufgenommenen Werte sind die Winkel dieser Orientierung um diese Achse.

Erfindungsgemäß wird zunächst ein Kalibrierschritt durchgeführt. Ziel des Kalibrierschrittes ist es, in einem Zuordnungsspeicher Zuordnungen von Werten der betrachteten Eigenschaften des Kamerazustandes zu Positionen zumindest eines Merkmals des Objektes im Bewegtbild zu hinterlegen. Die Position des zumindest einen Merkmals des Objektes kann dabei vorzugsweise die Position dieses Merkmals im von der Kamera aufgenommenen Bewegtbildsignal, also beispielsweise in einem gegebenen Frame, sein. Vorzugsweise wird dabei die Position im Bezugssystem bzw. Koordinatensystem des aufgenommenen Bewegtbildes gespeichert, das im Normalfall fest gegenüber einem Koordinatensystem des Kamerasensors ist. Vorteilhafterweise kann die Position hierbei sowohl den Ort des Merkmals, als auch die Orientierung und vorteilhafterweise auch die perspektivische Verzerrung des Merkmals umfassen, sofern das Merkmal eine Orientierung bzw. eine perspektivische Verzerrung aufweist.

Erfindungsgemäß werden also im Bewegtbildsignal Positionen zumindest eines Merkmals des Objektes für eine Vielzahl von Werten zumindest einer Eigenschaft des Kamerazustandes bestimmt und diese Positionen zusammen mit den entsprechenden Werten der Eigenschaft des Kamerazustandes, für welche diese Positionen bestimmt wurden, in einem Zuordnungsspeicher gespeichert. Im Zuordnungsspeicher können daher vorteilhaft Tupel abgelegt sein, die zum einen die Position und/oder Orientierung des Merkmals enthalten und zum anderen die Werte aller Sensoren, die für den Kamerazustand relevant sind. Im Zuordnungsspeicher ist also neben den von den Sensoren aufgenommenen Werten, die den Kamerazustand beschreiben, und den ermittelten Positionen und/oder Orientierungen des Merkmals auch Information gespeichert, welche die ermittelten Positionen und/oder Orientierungen des Merkmals mit jenen Werten der Eigenschaften des Kamerazustandes verbindet, bei denen diese Positionen und/oder Orientierungen bestimmt wurden.

Es kann nun ein Nachverfolgungsschritt ausgeführt werden, in welchem mittels des zumindest einen Sensors zumindest ein Wert der zumindest einen Eigenschaft des Kamerazustandes ermittelt wird und dann aus dem Zuordnungsspeicher die Position und/oder Orientierung des zumindest einen Merkmals des Objektes im Bewegtbild aus dem Zuordnungsspeicher ausgelesen wird. Es wird dabei jene Position und/oder Orientierung ausgelesen, welche den von den Sensoren bestimmten Werten zugeordnet ist.

In einer vorteilhaften Ausgestaltung der Erfindung kann der Kalibrierschritt auch während der Ausführung des Nachverfolgungsschrittes weiter ausgeführt werden und insbesondere für weitere Werte der betrachteten Eigenschaften des Kamerazustands durchgeführt werden.

Um das erfindungsgemäße Verfahren möglichst schnell zur Nachverfolgung von Objekten einsatzbereit zu machen, ist es bevorzugt, wenn aus zumindest einigen der im Kalibrierschritt im Zuordnungsspeicher gespeicherten Zuordnungen von Werten der zumindest einen Eigenschaft des Kamerazustandes zu Positionen des zumindest einen Merkmals des Objektes weitere Positionen des zumindest einen Merkmals des Objektes für weitere Werte der zumindest einen Eigenschaft des Kamerazustandes ermittelt werden, indem zumindest zwei Positionen interpoliert und/oder extrapoliert werden. Im einfachsten Fall kann eine Interpolation beispielsweise dadurch erfolgen, dass als interpolierte Position eine Mitte zwischen zwei bekannten Positionen berechnet wird. Die so berechnete Position kann dann einem Wert der Eigenschaft des Kamerazustands zugeordnet werden, der gerade der Mittelwert jener Werte ist, bei denen die beiden Positionen bestimmt wurden, deren Mitte als neue Position berechnet wurde.

Bei einer Mittenberechnung wie vorstehend beschrieben wird die Mittelposition vorzugsweise aus Positionen berechnet, die bei Werten der Eigenschaft des Kamerazustandes bestimmt wurden, die jenem Wert zunächst liegen, bei dem die neue Position berechnet werden soll.

Vorteilhafterweise kann die Interpolation auch dadurch erfolgen, dass eine stetig differenzierbare Funktion durch die bereits bestimmten Paare von Werten der Eigenschaften und Positionen des zumindest einen Merkmals gelegt wird und Positionen bei anderen Werten der Eigenschaft des Kamerazustands als Funktionswerte dieser Funktion berechnet werden.

In einer vorteilhaften Ausgestaltung der Erfindung können im Zuordnungsspeicher jene Positionen des zumindest einen Merkmals markiert werden, die, beispielsweise mittels Interpolation oder Extrapolation, berechnet wurden. Nimmt nun die Kamera ein Bild in einem Zustand auf, für den die Position des Merkmals des Objektes nur berechnet vorliegt, so kann in diesem Zustand der Kalibrierschritt erneut ausgeführt werden und im Zuordnungsspeicher den entsprechenden Werten der Kameraeigenschaften eine tatsächlich gemessene Position des Merkmals zugeordnet werden.

In einer vorteilhaften Ausgestaltung der Erfindung kann die im Nachverfolgungsschritt ausgelesene Position des zumindest einen Merkmals des Objektes als Startposition für eine Suche des Merkmals des Objektes in einem Bildverarbeitungsschritt verwendet werden. Ein Grund hierfür kann darin liegen, dass die Kamera auf nicht befestigtem Untergrund steht. Eventuelle Vibrationen werden dann unter bestimmten Umständen von keinem der Sensoren adäquat erfasst. Auf diese Weise kann die Position des Merkmals pixelgenau bestimmt werden. Es wird in diesem Fall vorteilhaft die ausgelesene Position des Merkmals als Startposition ermittelt und dann im Bildverarbeitungsschritt das Merkmal in der Nähe der Startposition gesucht. Die Erkennung des Merkmals im Bildverarbeitungsschritt ist auf viele verschiedene Weisen möglich, beispielsweise durch Kantenerkennung, Keying oder andere Mustererkennungsverfahren.

Vorteilhafterweise kann die im Bildverarbeitungsschritt ermittelte tatsächliche Position des Merkmals im Zuordnungsspeicher als jene Position gespeichert werden, die dem Wert der Eigenschaft des Kamerazustands zugeordnet ist, dem die im Nachverfolgungsschritt ausgelesene Position zugeordnet war. Es kann also im Zuordnungsspeicher vorteilhaft die als Startposition verwendete Position des Merkmals durch die genauere im Bildverarbeitungsschritt ermittelte Position ersetzt werden.

Vorteilhafterweise kann diese Ersetzung gerade dann oder nur dann ausgeführt werden, wenn die als Startposition ausgelesene Position eine berechnete Position war, die beispielsweise durch Interpolation oder Extrapolation wie vorstehend beschrieben berechnet worden ist. Durch die vorteilhafte Markierung berechneter Positionen im Zuordnungsspeicher sind diese leicht identifizierbar.

Erfindungsgemäß wird die Bestimmung der Position des zumindest einen Merkmals für mehrere Werte der zumindest einen Eigenschaft des Kamerazustands durchgeführt. Diese mehreren Werte können vorteilhaft verschiedenen Ausschnitten der Szenerie entsprechen. Wird also beispielsweise die Kamera über die Szenerie geschwenkt, so verändern sich die Werte jener Eigenschaften, die die Orientierung der Kamera beschreiben, während sich die Position des Merkmals des Objektes entlang eines stetigen Pfades durch das aufgenommene Bild ändert. Da der Pfad des Merkmals durch das Bild hier durch eine physikalische Veränderung des Kamerazustandes bedingt ist, kann vorausgesetzt werden, dass der Pfad des Merkmals durch das aufgenommene Bewegtbild stetig differenzierbar ist. Es ist daher optional möglich, die ermittelten Positionen im Zuordnungsspeicher zu glätten. Eine solche Glättung kann beispielsweise dadurch geschehen, dass eine stetig differenzierbare Funktion an die gespeicherten Positionen angepasst bzw. gefittet wird und dann die gespeicherten Positionen auf die gefittete Funktion an den entsprechenden Werten der Eigenschaften des Kamerazustandes verschoben werden. Eine andere vorteilhafte Möglichkeit der Glättung besteht beispielsweise darin, dass jede Position im Zuordnungsspeicher durch eine aus einer bestimmten Zahl von umliegenden Positionen gemittelte Position ersetzt wird. Die Positionen können also beispielsweise durch einen gleitenden Mittelwert ersetzt werden. Die in die Mittlung eingehenden Positionen sind dabei vorzugsweise eine bestimmte Anzahl von beidseitig benachbarten Positionen der anzupassenden Position.

In einer vorteilhaften Ausgestaltung der Erfindung kann zusätzlich geprüft werden, ob eine im Kalibrierschritt ermittelte Position des Merkmals physikalisch möglich ist. Wurde das Merkmal für einige Zustände der Kamera erfolgreich bestimmt, so kann vorausgesetzt werden, dass das Merkmal in jeder weiteren Ausführung des Kalibrierschritts nur an solchen Positionen auftreten kann, die von den bereits ermittelten Positionen physikalisch erreicht werden können. In einer vorteilhaften Ausgestaltung der Erfindung kann jede Erkennung des Merkmals hieraufhin überprüft werden und solche Erkennungen des Merkmals, die dieser Bedingung nicht genügen, als fehlerhaft verworfen werden. Wird beispielsweise die Kamera entlang eines bestimmten Pfades über die Szenerie geschwenkt, so kann vorausgesetzt werden, dass die Position des Merkmals einem stetig differenzierbaren Pfad folgt, der sich durch diesen Schwenk ergibt. Wurde das Merkmal einige Male erfolgreich bestimmt, so ist die Zahl möglicher Pfade daher durch die Bedingung physikalischer Möglichkeiten eingeschränkt. Wird nun das Merkmal in einer Ausführung des Kalibrierschritts abseits eines möglichen Pfades detektiert, so kann es als fehlerhaft verworfen werden.

Wird beispielsweise die Merkmalserkennung mittels Farbkeyings ausgeführt, so kann es vorkommen, dass in der Szenerie die Keyingfarbe für eine Anzahl von Frames auch an anderen Positionen als jenen des Merkmals auftritt. Da jedoch diese Positionen von den bekannten Positionen normalerweise nicht durch den bekannten Kameraschwenk erreicht werden können, kann diese Position der Keyingfarbe als fehlerhaft verworfen werden.

In einer vorteilhaften Ausgestaltung der Erfindung kann auch der zeitliche Verlauf von Merkmalspositionen berücksichtigt werden. Der Kamerazustand nimmt unterschiedliche Werte seiner Eigenschaften zeitlich nacheinander an. Im aufgenommenen Bewegtbild nehmen die beobachteten Merkmale des Objektes unterschiedliche Positionen daher zeitlich nacheinander an. Vorteilhafterweise können aus dem zeitlichen Verlauf der Positionen des zumindest einen Merkmals weitere Positionen für bisher nicht angenommene Werte des Kamerazustandes extrapoliert werden. Es können also aus dem zeitlichen Verlauf der Positionen weitere Positionen des Merkmals des Objekts berechnet werden.

Vorteilhafterweise kann der zeitliche Verlauf der Positionen des Merkmals des Objekts daraufhin überprüft werden, ob dieser Verlauf physikalisch möglich ist. Im Fall, dass der Verlauf als physikalisch nicht möglich erkannt wird, werden jene Positionen, die physikalisch nicht möglich sind, als fehlerhaft gekennzeichnet und/oder verworfen.

In einer vorteilhaften Ausgestaltung der Erfindung können die Positionen des Merkmals so verschoben werden, dass der zeitliche Verlauf der Positionen geglättet wird. Es kann dabei beispielsweise eine stetig differenzierbare Funktion an zeitlich nacheinander aufgenommene Positionen angepasst werden und die Positionen dann auf diese stetig differenzierbare Funktion verschoben werden.

Die fraglichen Merkmale des Objektes können beispielsweise Kanten des Objektes, Flächen des Objektes, und/oder Bereiche des Objektes mit einer vorgegebenen Farbe, Farbverläufe, Texturmuster, Key-Points, vorzugsweise mit hoher visueller Salienz, aus einer Objektnachbarschaft oder aus Verfahren zum Optical Flow abgeleitete Merkmale, lokale Deskriptoren wie Kantenschärfe, -stärke, oder -richtung oder eine Kombination aus vorgenannten Merkmalen sein.

Vorteilhafterweise können die Merkmale des Objektes im aufgenommenen Bewegtbild beispielsweise mittels color keying, Kantenerkennung oder auf andere Weise bestimmt werden. Auch ist es möglich, das Objekt so zu kodieren, dass ein unmittelbarer Betrachter der Szenerie das Objekt sieht, eine Kamera aber die Codierung erkennt. Derartige Möglichkeiten sind z. B. in der WO 2012/038009 beschrieben.

Ist eine Geometrie des Objektes bekannt, so kann vorteilhaft aus bereits erkannten Merkmalen des Objektes auf andere Merkmale geschlossen werden.

Vorteilhafterweise sind die Sensoren, welche Eigenschaften des Kamerazustands bestimmen, mechanische bzw. elektromechanische Sensoren. Diese können einen mechanischen Zustand der Kamera in elektrische Signale umwandeln, aus denen die Werte der Eigenschaft des Kamerazustandes bestimmt werden können.

Erfindungsgemäß wird außerdem ein Verfahren zum Ersetzen zumindest eines Objektes durch zumindest ein virtuelles Objekt in einem von einer Kamera aufgenommenen Bewegtbild angegeben. Es wird dabei das Objekt in einem vorstehend beschriebenen Verfahren verfolgt. Es wird dabei dann im beschriebenen Zuordnungsschritt eine Position des realen Objektes im Bewegtbild anhand der von den Sensoren gemessenen Werte von Eigenschaften des Kamerazustands ausgelesen und an der so ermittelten Position die Abbildung des realen Objektes durch ein Bild des virtuellen Objektes ersetzt. Vorteilhaft kann die Ersetzung einzelbildweise erfolgen.

Die erfindungsgemäßen Verfahren zur Nachverfolgung und zum Ersetzen von Objekten in von einer Kamera aufgenommenen Bewegtbildern sind besonders vorteilhaft einsetzbar, um beispielsweise in Sportübertragungen Banden durch andere Bilder oder Werbung zu ersetzen. In diesem Fall wäre das zu erkennende Objekt die Bande. Ist die Position der Bande im aufgenommenen Bewegtbild bekannt, so kann sie durch ein anderes Bild ersetzt werden.

Erfindungsgemäß wird außerdem eine Bildverarbeitungsvorrichtung angegeben, die zumindest eine Kamera und zumindest eine Recheneinheit aufweist, und mit welcher das vorstehend beschriebene Verfahren zum Nachverfolgen zumindest eines Objektes in einem von der Kamera aufgenommenen Bewegtbildsignal und/oder das vorstehend beschriebene Verfahren zum Ersetzen zumindest eines Objektes durch zumindest ein virtuelles Objekt in einem von einer Kamera aufgenommenen Bewegtbildsignal durchführbar ist.

Das Kamerabild kann auch als Bild oder Szene oder Bewegtbildsignal bezeichnet werden. Falls im Text von einem Objekt gesprochen wird, ergibt es sich aus dem Kontext, ob es sich dabei um ein reales Objekt oder ein virtuelles Objekt handelt. Die Erfindung dient u. a. zum Ersetzen eines realen Objektes durch ein virtuelles Objekt. Dabei werden nicht notwendigerweise alle realen erkannten Objekte ersetzt. Es ist vorzugsweise dem Nutzer der Erfindung freigestellt, ob (ggf. an Bedingungen geknüpft) und welche realen Objekte durch virtuelle Objekte ersetzt werden. Ein reales Objekt wird teilweise auch als zu verfolgendes Objekt bezeichnet. Statische Objekte sind insbesondere Objekte, die sich gegenüber dem Kamerastativfusspunkt nicht bewegen. Beispiel: Eine Kamera ist auf ein Stativ montiert, das Stativ steht auf dem Erdboden, dann ist ein Haus in Bezug auf die Kamera statisch, auch wenn die Kamera gedreht oder gekippt wird, hingegen ist eine laufende Person dynamisch.

In Bezug auf ein Objekt wird ein anderes Objekt als statisch bezeichnet, wenn sich die Raumlage der Objekte in einen gegebenen Zeitraum zueinander nicht ändert, das Gegenteil wird als dynamisch bezeichnet. Statische Szenenbestandteile sind somit ein oder mehrere Objekte im Kamerabild, die ihre Raumlage in Bezug auf ein weiteres Objekt in einem gegebenen Zeitraum nicht ändern.

Das erfindungsgemäße Verfahren und die erfindungsgemäße Vorrichtung beruhen vorteilhaft darauf, dass es **unabhängig** von dem verwendeten Sensorsystem und der daraus resultierenden Genauigkeit für das Modell vorzugsweise alle dort erfassten Kameraparameter verwendet, um eine grobe Ortsbestimmung zu erhalten. Das vorgegebene Modell muss dann nicht präzisiert werden. Es kann vielmehr ein eigenes Modell verwendet werden, wonach Objekte präzise im Kamerabild platziert werden können. Dadurch entsteht eine Unabhängigkeit von dem zugrunde liegenden Modell und es kann mit allen anderen Trackingsystemen kombiniert werden. Hierzu werden ein oder mehrere bekannte Merkmale des zu verfolgenden realen Objektes im Kamerabild gesucht und in Relation zu den gelieferten Sensorwerten gesetzt. Diese Relationen ("Sensorwertkombination" - "Erscheinungsform der Merkmale im Kamerabild") akkumulieren sich über die Zeit und sorgen damit für eine wachsende Genauigkeit. Ausfälle von Sensoren, unvollständige Daten, Ungenauigkeiten, Messfehler oder Verdeckungen von Merkmalen im Kamerabild können vorteilhaft durch Interpolation überbrückt werden.

Zusätzlich können Merkmale der Szene, die nicht vom zu verfolgenden Objekt stammen, jedoch eine Lokalisierung des Objektes zulassen (z.B. statische Szenenbestandteile rund um ein statisch aufgestelltes Objekt) mit in die Relation aufgenommen bzw. in separaten Relationen abgespeichert werden. Die durch die Kameraperspektive entstandene Verzerrung der Merkmale des realen Objekts kann vorteilhaft an die Grafik übermittelt werden, um den Ersatz adäquat zu platzieren. Die Platzierung erfolgt dabei nicht notwendigerweise durch 3D-Rendering. In Situationen, in denen zu wenige Merkmale im Kamerabild sichtbar sind, hängt die Genauigkeit von der Interpolation und dem zugrunde liegenden Trackingsystem ab. Aufwendige Vorvermessungen beispielsweise der realen Szene oder der Objektiveigenschaften entfallen.

Die im Zuordnungspeicher gespeicherten Daten können optional zusätzlich dazu herangezogen werden, ein 3D-Abbild der von der Kamera aufgenommen Szene und/oder auch die Position (x, y, z) der aufnehmenden Kamera mit und ohne weitere Hilfe von Sensoren zu berechnen. Insbesondere können hierfür vorteilhaft die Daten mehrerer Kameras gegeneinander abgeglichen werden. Die dadurch gewonnenen Ergebnisse können vorteilhaft die Ermittlung von Positionen mobiler Kameras entsprechend unterstützen.
Es sei angemerkt, dass es hierbei nicht notwendigerweise um den pixelweisen Ersatz des Objektes (Keying) geht, sondern lediglich um die Findung seiner pixelgenauen Position, Form und/oder Orientierung (Tracking).

Im Folgenden soll die Erfindung anhand einer Figur beispielhaft erläutert werden. Die in dem Beispiel beschriebenen Merkmale können jedoch auch unabhängig von dem gezeigten Beispiel realisiert sein und die Merkmale sind in dem Beispiel nur insofern wesentlich, als sie vorstehend als wesentlich für die Erfindung beschrieben wurden.
Es zeigt
- Figur 1: zeigt eine beispielhafte Ausführung des erfindungsgemäßen Verfahrens.
- Figur 2: ein Beispiel einer Interpolation von erkannten Positionen,
- Figur 3: ein Beispiel einer Glättung von erkannten Positionen und
- Figur 4: ein Beispiel einer Plausibilitätsprüfung zur Erkennung fehlerhaft erkannter Merkmale.

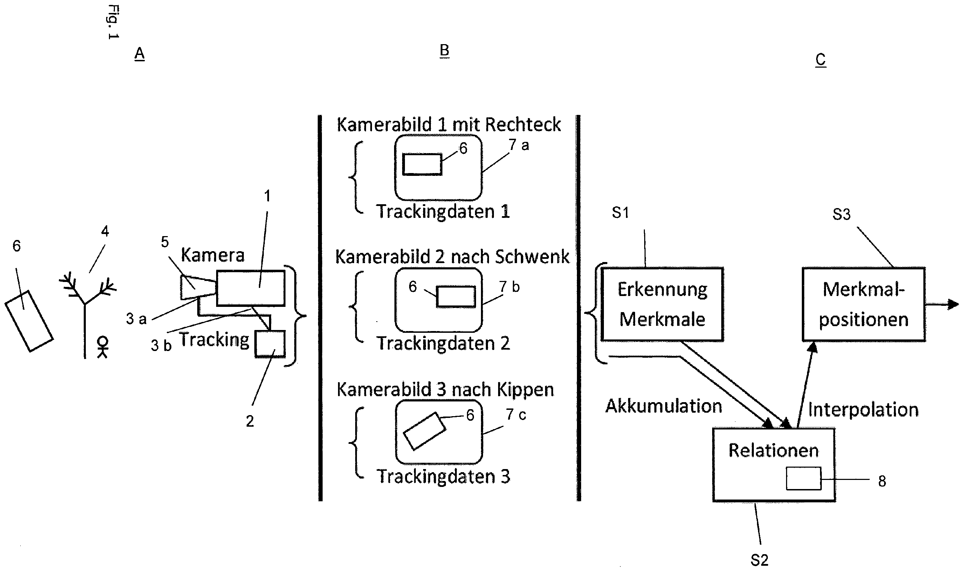

Figur 1 zeigt eine beispielhafte Ausgestaltung der Erfindung. Dabei zeigt Teilfigur A schematisch einen Aufbau zur Durchführung des erfindungsgemäßen Verfahrens, Teilfigur B drei Frames eines von der Kamera aufgenommenen Bewegtbildes und Teilfigur C ein schematisches Flussdiagramm des erfindungsgemäßen Verfahrens.

Figur 1A zeigt schematisch einen Aufbau, mit dem das erfindungsgemäße Verfahren durchführbar ist. Das System umfasst eine Kamera 1 und eine Auswertungseinheit 2. Die Kamera 1 weist ein oder mehrere Sensoren 3a und 3b auf, mit denen ein oder mehrere Eigenschaften eines Zustandes der Kamera 1 bestimmbar sind.

Die Kamera 1 weist ein Objektiv 5 auf, mit dem sie einen Ausschnitt einer Szenerie 4 aufnimmt. In der Szenerie 4 liegt zumindest ein Objekt 6 vor, welches zumindest zeitweise zumindest teilweise im von der Kamera 1 aufgenommenen Ausschnitt der Szenerie 4 vorliegt.

Figur 1B zeigt beispielhaft drei Ausschnitte 7a, 7b und 7c während eines Schwenks über die Szenerie 4. Dabei wird die Kamera vom Ausschnitt 7a zum Ausschnitt 7B horizontal geschwenkt und vom Ausschnitt 7b zum Ausschnitt 7c gekippt. Es ist zu erkennen, dass das Objekt 6 in den drei Ausschnitten 7a, 7b und 7c in unterschiedlichen Positionen und unterschiedlichen Orientierungen vorliegt.

Figur 1C zeigt schematisch eine Durchführung des erfindungsgemäßen Verfahrens. Es werden in einem Schritt S1 Merkmale des Objektes 6 erkannt und in einem Schritt S2 Positionen der erkannten Merkmale des Objekts 6 zugeordnet zu Werten von Eigenschaften des Kamerazustands, die mittels der Sensoren 3a und 3b ermittelt wurden, in einem Zuordnungsspeicher 8 gespeichert. In einem Nachverfolgungsschritt S3 können dann aus dem Zuordnungsspeicher 8 anhand von durch die Sensoren 3a und 3b bestimmten Werten von Eigenschaften des Kamerazustandes Positionen von Merkmalen des Objektes 6 aus dem Zuordnungsspeicher 8 ausgelesen werden.

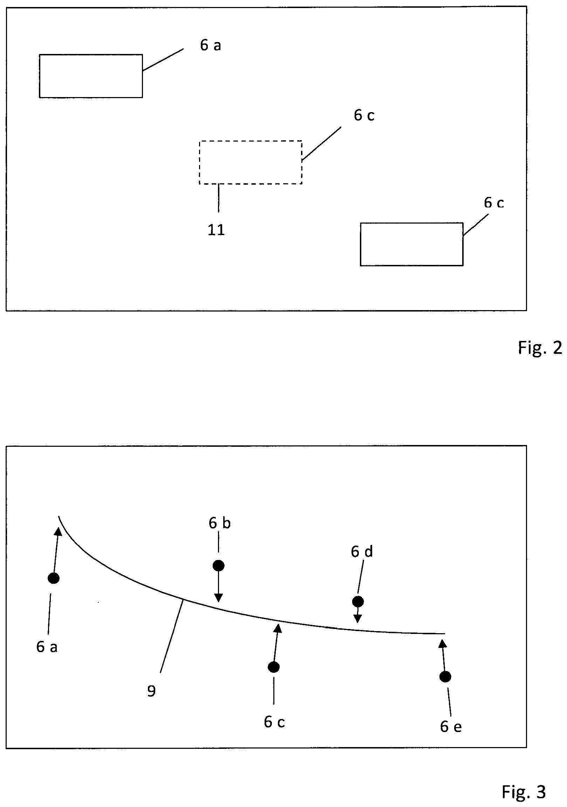

Figur 2 zeigt beispielhaft, wie aus zwei im Kalibrierschritt im Zuordnungsspeicher gespeicherten Zuordnungen von Werten der zumindest einen Eigenschaft des Kamerazustandes zu Positionen 6a und 6b des zumindest einen Merkmals des Objektes 6 weitere Positionen 6c des zumindest einen Merkmals des Objekts für weitere Werte der zumindest einen Eigenschaft des Kamerazustands ermittelt werden können. Es werden dabei zumindest zwei Positionen 6a und 6b, die vorzugsweise Werten der Eigenschaft, die dem entsprechenden weiteren Wert zunächst liegen, zugeordnet sind, interpoliert und/oder extrapoliert, so dass zumindest eine weitere Position 6c berechnet wird. Die mittels Interpolation oder Extrapolation ermittelte Position 6c kann mit einem Marker M als berechnet markiert werden.

Nimmt nun die Kamera 1 einen Zustand an, bei dem die Sensoren Werte liefern, bei denen im Zuordnungsspeicher das Objekt 6 in einer Position 6a, 6b oder 6c gespeichert ist, so kann die ermittelte Position des Objektes 6 weiter erhöht werden, wenn in einem Bildverarbeitungsschritt die tatsächliche Position 6a, 6b oder 6c des Merkmals des Objektes 6 ermittelt wird. Insbesondere wenn die Position 6c als berechnet markiert war, ist es vorteilhaft, wenn die durch die Bildverarbeitung ermittelte tatsächliche Position im Zuordnungsspeicher 8 die berechnete Position 6c ersetzt.

Figur 3 zeigt beispielhaft, wie im Zuordnungsspeicher gespeicherte Positionen 6a bis 6e des zumindest einen Merkmals des Objektes 6 geglättet werden können. Der Einfachheit halber sind hier die ermittelten Positionen 6a bis 6e nur als Punkte dargestellt. Eine Glättung kann beispielsweise dadurch bewirkt werden, dass eine stetig differenzierbare Funktion 9 an die gespeicherten Positionen 6a bis 6e gefittet wird und dann die gespeicherten Positionen 6a bis 6e auf die gefittete Funktion verschoben werden. Die Glättung kann auch dadurch bewirkt werden, dass die Positionen jeweils auf einen Mittelwert einer vorgegebenen Anzahl in beide Richtungen zur entsprechenden Position benachbarten Positionen verschoben werden.

Analog wie in Figur 3 gezeigt, kann die Glättung auch zeitlich erfolgen. In diesem Falle stellen die eingezeichneten Positionen 6a bis 6e zeitlich aufeinanderfolgend ermittelte Positionen dar. Nimmt man an, dass die Kamera entlang eines glatten Pfades schwenkt, so können die Abweichungen der Positionen 6a bis 6e von einer stetig differenzierbaren Kurve als Rauschen identifiziert werden. Durch Glätten kann dieser Fehler ausgeglichen werden.

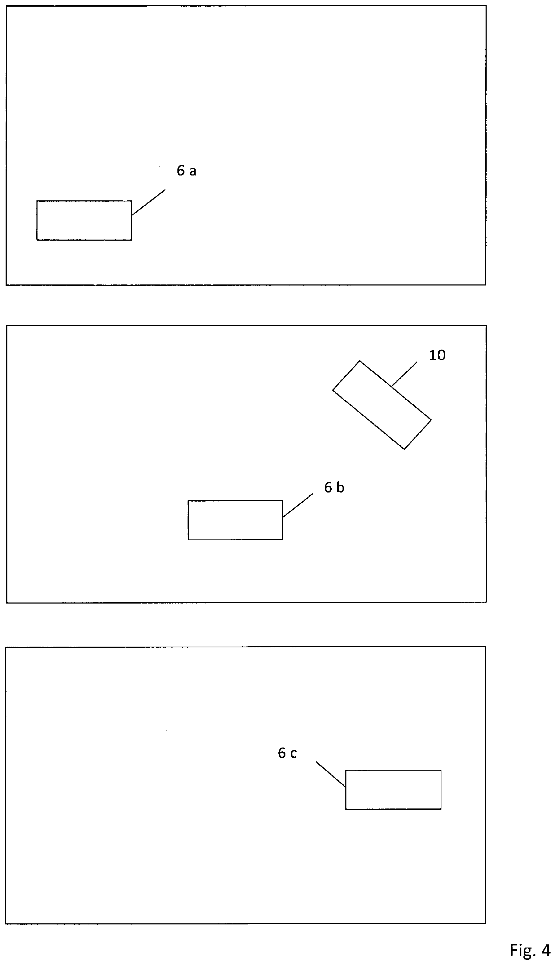

Figur 4 zeigt beispielhaft, wie fehlerhafte Erkennungen 10 des zumindest einen Merkmals des Objektes 6 erkannt werden können. Gezeigt sind drei von der Kamera aufgenommene Ausschnitte. Da die Kamera über die Szenerie schwenkt, bewegt sich das Objekt von einer Position 6a zu einer Position 6b und dann zu einer Position 6c. Diese Bewegung ist durch die physikalischen Eigenschaften der Kamera vorgegeben. Im mittleren Ausschnitt wird nun fehlerhaft ein Objekt 10 erkannt. Da dieses jedoch aufgrund der physikalischen Eigenschaften des Kameraaufbaus nicht das Objekt 6 sein kann, da es zu weit von diesem entfernt ist, kann die Erkennung 10 als fehlerhaft verworfen werden.

Die Sensoren 3a und 3b können beispielsweise ein oder mehrere Eigenschaften des Kamerazustands ausgewählt aus der Gruppe umfassend Schwenk (Pan), Neigung (Tilt), seitliches Kippen (Roll), Zoom, Fokus, Linsenverzeichnung, Tiefenschärfe, Versatz der optischen Achse gegenüber einem letzten Gelenk und/oder Versatz der optischen Achse gegenüber einem Kamerabildsensor bestimmen. Vorzugsweise sind diese Sensoren mechanische Sensoren oder elektromechanische Sensoren.

## Patentansprüche

1. Verfahren zum Nachverfolgen zumindest eines Objektes in einem von einer Kamera aufgenommenen Bewegtbildsignal,
wobei die Kamera Ausschnitte einer Szenerie aufnimmt, in welchen Ausschnitten das Objekt zumindest zeitweise zumindest teilweise vorliegt,
und wobei die Kamera das Bewegtbildsignal als Abbildung der aufgenommenen Ausschnitte erzeugt,
wobei mit zumindest einem Sensor Werte zumindest einer Eigenschaft eines Kamerazustandes bestimmt werden,
wobei in einem Kalibrierschritt
in dem Bewegtbildsignal Positionen zumindest eines Merkmals des Objektes für eine Vielzahl der Werte der zumindest einen Eigenschaft des Kamerazustandes bestimmt werden,
und diese Positionen zugeordnet zu jenen Werten der Eigenschaft des Kamerazustandes, für die diese Positionen bestimmt wurden, in einem Zuordnungsspeicher gespeichert werden,
wobei in einem Nachverfolgungsschritt
zumindest ein Wert der zumindest einen Eigenschaft des Kamerazustandes mittels des zumindest einen Sensors bestimmt wird, und als Position des zumindest einen Merkmals des Objektes jene Position aus dem Zuordnungspeicher ausgelesen wird, die diesem Wert zugeordnet gespeichert ist,
wobei aus zumindest einigen der im Kalibrierschritt im Zuordnungsspeicher gespeicherten Zuordnungen von Werten der zumindest einen Eigenschaft des Kamerazustandes zu Positionen des zumindest einen Merkmals des Objektes weitere Positionen des zumindest einen Merkmals des Objektes für weitere Werte der zumindest einen Eigenschaft des Kamerazustandes ermittelt werden, indem
zumindest zwei Positionen, die vorzugsweise Werten der Eigenschaft, die dem entsprechenden weiteren Wert zunächst liegen, zugeordnet sind, interpoliert und/oder extrapoliert werden,
wobei jene Positionen, die mittels Interpolation oder Extrapolation ermittelt wurden, im Zuordnungsspeicher als berechnet markiert werden,
wobei die im Nachverfolgungsschritt ausgelesene Position des zumindest einen Merkmals des Objektes als Startposition für eine Suche des Merkmals des Objektes in einem Bildverarbeitungsschritt verwendet wird und in dem Bildverarbeitungsschritt eine tatsächliche Position des Merkmals ermittelt wird,
wobei die im Bildverarbeitungsschritt ermittelte tatsächliche Position im Zuordnungsspeicher als jene Position gespeichert wird, die jenem Wert der Eigenschaft des Kamerazustandes zugeordnet ist, dem die im Nachverfolgungsschritt ausgelesene Position zugeordnet war, und
wobei die im Bildverarbeitungsschritt ermittelte tatsächliche Position nur dann im Zuordnungsspeicher als jene Position gespeichert wird, die jenem Wert der Eigenschaft des Kamerazustandes zugeordnet ist, dem die im Nachverfolgungsschritt ausgelesene Position zugeordnet war, wenn die im Nachverfolgungsschritt ausgelesene Position eine berechnete Position war.

2. Verfahren nach dem vorhergehenden Anspruch,
wobei die im Zuordnungsspeicher gespeicherten Positionen des zumindest einen Merkmals des zumindest einen Objektes geglättet werden.

3. Verfahren nach dem vorhergehenden Anspruch,
wobei die Glättung dadurch bewirkt wird, dass eine stetig differenzierbare Funktion an die gespeicherten Positionen gefittet wird und dann die gespeicherten Positionen auf die gefittete Funktion verschoben werden und/oder wobei die Glättung dadurch bewirkt wird, dass die Positionen jeweils auf einen Mittelwert einer vorgegebenen Anzahl in beide Richtungen zur entsprechenden Position benachbarten Positionen verschoben werden.

4. Verfahren nach einem der vorhergehenden Ansprüche,
wobei fehlerhafte Erkennungen des zumindest einen Merkmals des Objektes ermittelt werden, indem mehrere Positionen des Merkmals bei unterschiedlichen Werten der Eigenschaft des Kamerazustandes verglichen werden und solche Positionen als fehlerhaft bestimmt werden, die aufgrund von physikalischen Eigenschaften der Kamera nicht möglich sind.

5. Verfahren nach einem der vorhergehenden Ansprüche,
wobei weitere Positionen des zumindest einen Merkmals des Objektes bestimmt werden, indem ein zeitlicher Verlauf der Position des Merkmals extrapoliert wird.

6. Verfahren nach einem der vorhergehenden Ansprüche,
wobei ein zeitlicher Verlauf der Positionen des Merkmals des Objektes daraufhin überprüft wird, ob dieser Verlauf physikalisch möglich ist, und im Fall, dass der Verlauf physikalisch nicht möglich ist, die als physikalisch nicht möglichen Positionen als fehlerhaft gekennzeichnet und/oder verworfen werden.

7. Verfahren nach einem der vorhergehenden Ansprüche,
wobei die Positionen des Merkmales so verschoben werden, dass der zeitliche Verlauf der Positionen geglättet wird.

8. Verfahren nach einem der vorhergehenden Ansprüche,
wobei die Eigenschaften des Kamerazustandes eine oder mehrere ausgewählt aus der Gruppe umfassend Schwenk, Pan, Neigung, Tilt, seitliches Kippen, Roll, Zoom, Fokus, Linsenverzeichnung, Tiefenschärfe, Versatz der optischen Achse gegenüber einem letzten Gelenk, Versatz der optischen Achse gegenüber einem Kamerabildsensor und/oder eine, zwei oder drei Koordinaten des Ortes der Kamera im Raum, sind.

9. Verfahren nach einem der vorhergehenden Ansprüche, wobei die Merkmale des Objektes Kanten des Objektes, Flächen des Objektes
und/oder Bereiche des Objektes mit einer vorgegebenen Farbe oder eine Kombination aus mehreren dieser Merkmale umfassen oder sind.

10. Verfahren nach einem der vorhergehenden Ansprüche, wobei aus Kenntnis der Lage der Merkmale zueinander im Objekt die Lage von anderen Merkmalen des Objektes abgeleitet wird.

11. Verfahren nach einem der vorhergehenden Ansprüche, wobei die Sensoren mechanische Sensoren sind.

12. Verfahren zum Ersetzen zumindest eines Objektes durch zumindest ein virtuelles Objekt in einem von einer Kamera aufgenommenen Bewegtbildsignal,
wobei das Objekt mittels eines Verfahrens nach einem der vorhergehenden Ansprüche nachverfolgt wird und mittels der aus dem Zuordnungsspeicher ausgelesenen Position des zumindest einen Merkmals bestimmt wird, in welchem Bereich des Bewegtbildes das zumindest eine Objekt vorliegt und jener Bereich des Bewegtbildes, in dem das Objekt vorliegt, durch eine Darstellung des virtuellen Objektes ersetzt wird.

13. Bildverarbeitungsvorrichtung aufweisend zumindest eine Kamera und zumindest eine Recheneinheit,
wobei die Bildverarbeitungsvorrichtung eingerichtet ist zur Ausführung eines Verfahrens nach einem der vorhergehenden Ansprüche.

## Claims

1. Method for tracking at least one object in a moving image signal recorded by a camera,
the camera recording sections of a scene, in which sections the object is present at least at times and at least partially,
and the camera producing the moving image signal as image of the recorded sections,
values of at least one property of a camera state being determined with at least one sensor,
wherein in a calibration step,
in the moving image signal positions of at least one feature of the object are determined for a large number of the values of the at least one property of the camera state,
and these positions being stored assigned to those values of the property of the camera state for which these positions were determined in an assignment memory,
wherein in a tracking step,
at least one value of the at least one property of the camera state is determined by means of the at least one sensor, and that position which is stored assigned to this value is read out of the assignment memory as position of the at least one feature of the object,
wherein
from at least some of the assignments of values of the at least one property of the camera state to positions of the at least one feature of the object, stored in the assignment memory in the calibration step, further positions of the at least one feature of the object for further values of the at least one property of the camera state are determined,
by interpolating and/or extrapolating at least two positions, which are preferably assigned to values of the property which are next to the corresponding further value, wherein
those positions which were determined by means of interpolation or extrapolation being marked as calculated in the assignment memory, wherein
the position, read out in the tracking step, of the at least one feature of the object being used as start position for a search for the feature of the object in an image processing step and an actual position of the feature being determined in the image processing step,
the actual position, determined in the image processing step, being stored in the assignment memory as that position which is assigned to that value of the property of the camera state to which the position read out in the tracking step was assigned, and
wherein
the actual position determined in the image processing step only then being stored in the assignment memory as that position which is assigned to that value of the property of the camera state to which the position read out in the tracking step was assigned if the position read out in the tracking step was a calculated position.

2. Method according to the preceding claim,
the positions, stored in the assignment memory, of the at least one feature of the at least one object being smoothed.

3. Method according to the preceding claim,
the smoothing being effected by a continuously differentiable function being fitted to the stored positions and then the stored positions being displaced towards the fitted function and/or smoothing being effected by the positions being displaced respectively towards a mean of a prescribed number of in both directions relative to the corresponding position adjacent positions.

4. Method according to one of the preceding claims,
incorrect recognitions of the at least one feature of the object being determined by a plurality of positions of the feature being compared at different values of the property of the camera state and those positions which are not possible because of the physical properties of the camera being determined as incorrect.

5. Method according to one of the preceding claims,
further positions of the at least one feature of the object being determined by a temporal course of the position of the feature being extrapolated.

6. Method according to one of the preceding claims,
a temporal course of the positions of the feature of the object being checked with respect to whether this course is physically possible and, in the case where the course is not physically possible, the positions which are not physically possible being characterised as incorrect and/or being rejected.

7. Method according to one of the preceding claims,
the positions of the feature being displaced such that the temporal course of the positions is smoothed.

8. Method according to one of the preceding claims,
the properties of the camera state being one or more selected from the group comprising swivel, pan, inclination, tilt, lateral tilting, roll, zoom, focus, lens distortion, depth of field, offset of the optical axis relative to a last nodal point, offset of the optical axis relative to a camera image sensor and/or one, two or three coordinates of the location of the camera in space.

9. Method according to one of the preceding claims,
the features of the object comprising or being edges of the object, surfaces of the object and/or regions of the object with a prescribed colour or a combination of a plurality of these features.

10. Method according to one of the preceding claims,
the position of other features of the object being derived from knowledge of the position of the features relative to each other in the object.

11. Method according to one of the preceding claims,
the sensors being mechanical sensors.

12. Method for replacing at least one object by at least one virtual object in a moving image signal recorded by a camera,
the object being tracked by means of a method according to one of the preceding claims and wherein by means of the position, read out of the assignment memory of the at least one feature it is determined, in which region of the moving image the at least one object is present and that region of the moving image in which the object is present being replaced by a representation of the virtual object.

13. Image processing device having at least one camera and at least one computing unit,
the image processing device being equipped to implement a method according to one of the preceding claims.

## Revendications

1. Procédé de suivi d'au moins un objet dans un signal d'image animée enregistré par une caméra,
la caméra enregistrant des portions d'un décor, l'objet se trouvant au moins temporairement au moins partiellement dans ces portions,
et la caméra générant le signal d'image animée en tant que représentation des portions enregistrées,
les valeurs d'au moins une propriété d'un état de la caméra étant déterminée avec au moins un capteur,
de sorte que, dans une étape de calibrage,
dans le signal d'image animée, les positions d'au moins une caractéristique de l'objet soient déterminées pour une pluralité de valeurs de l'au moins une propriété de l'état de la caméra,
et ces positions allouées aux valeurs de la propriété de l'état de la caméra pour lesquelles ces positions ont été déterminées, étant enregistrées dans une mémoire d'allocation,
de sorte que, dans une étape de suivi,
au moins une valeur de l'au moins une propriété de l'état de la caméra soit déterminée au moyen de l'au moins un capteur et, en tant que position de l'au moins une caractéristique de l'objet, la position enregistrée de manière correspondante à cette valeur étant lue dans la mémoire d'allocation,
à partir d'au moins certaines des allocations de valeurs de l'au moins une propriété de l'état de la caméra, enregistrées lors de l'étape de calibrage dans la mémoire d'allocation, à des positions de l'au moins une caractéristique de l'objet, d'autres positions de l'au moins une caractéristique de l'objet étant déterminées pour d'autres valeurs de l'au moins une propriété de l'état de la caméra en interpolant et/ou extrapolant au moins deux positions, qui sont allouées de préférence à des valeurs de la propriété qui sont les plus proches de l'autre valeur correspondante,
les positions déterminées au moyen d'une interpolation ou d'une extrapolation étant marquées comme calculées dans la mémoire d'allocation,
la position, lue lors de l'étape de suivi, de l'au moins une caractéristique de l'objet étant utilisée comme une position de départ pour une recherche de la caractéristique de l'objet dans une étape de traitement d'image et, dans l'étape de traitement d'image, une position réelle de la caractéristique étant déterminée,
la position réelle déterminée dans l'étape de traitement d'image étant enregistrée dans la mémoire d'allocation comme la position allouée à la valeur de la propriété de l'état de la caméra à laquelle a été allouée la position lue dans l'étape de suivi et
la position réelle déterminée dans l'étape de traitement d'image n'étant enregistrée dans la mémoire d'allocation comme la position qui est allouée à la valeur de la propriété de l'état de la caméra à laquelle la position lue dans l'étape de suivi a été allouée, que lorsque la position lue dans l'étape de suivi était une position calculée.

2. Procédé selon la revendication précédente,
les positions, enregistrées dans la mémoire d'allocation, de l'au moins une caractéristique de l'au moins un objet étant lissées.

3. Procédé selon la revendication précédente,
le lissage étant effectué en ajustant une fonction différenciable en continu aux positions enregistrées puis en déplaçant les positions enregistrées vers la fonction ajustée et/ou le lissage étant effectué en déplaçant respectivement les positions d'une valeur moyenne d'un nombre prédéterminé dans les deux directions vers des positions voisines de la position correspondante.

4. Procédé selon l'une des revendications précédentes,
des détections erronées de l'au moins une caractéristique de l'objet étant déterminées, en comparant plusieurs positions de la caractéristique pour différentes valeurs de la propriété de l'état de la caméra, et en déterminant comme erronées les positions qui ne sont pas possibles du fait des propriétés physiques de la caméra.

5. Procédé selon l'une des revendications précédentes,
d'autres postions de l'au moins une caractéristique de l'objet étant déterminées en extrapolant une évolution temporelle de la position de la caractéristique.

6. Procédé selon l'une des revendications précédentes,
une évolution temporelle des positions de la caractéristique de l'objet étant contrôlée afin de vérifier si cette évolution est possible physiquement et, dans le cas où l'évolution est impossible physiquement, les positions impossibles physiquement étant désignées comme erronées et/ou rejetées.

7. Procédé selon l'une des revendications précédentes,
les positions de la caractéristique étant déplacées de façon à ce que l'évolution temporelle des positions soit lissée.

8. Procédé selon l'une des revendications précédentes,
les propriétés de l'état de la caméra étant une ou plusieurs propriétés sélectionnées dans le groupe comprenant le pivotement (pan), l'inclinaison (tilt), le basculement latéral (roll), le zoom, le focus, la distorsion des lentilles, la profondeur de champ, le décalage de l'axe optique par rapport à une dernière articulation, le décalage de l'axe optique par rapport à un capteur d'image de caméra et/ou une, deux ou trois coordonnées de l'emplacement de la caméra dans la pièce.

9. Procédé selon l'une des revendications précédentes, les caractéristiques de l'objet comprenant ou étant des arêtes de l'objet, des surfaces de l'objet et/ou des parties de l'objet avec une couleur prédéterminée ou une combinaison de plusieurs de ces caractéristiques.

10. Procédé selon l'une des revendications précédentes, la connaissance de la position des caractéristiques dans l'objet, les unes par rapport aux autres, permettant de déduire la position d'autres caractéristiques de l'objet.

11. Procédé selon l'une des revendications précédentes, les capteurs étant des capteurs mécaniques.

12. Procédé pour le remplacement d'au moins un objet par au moins un objet virtuel dans un signal d'image animée enregistré par une caméra,
l'objet étant suivi au moyen d'un procédé selon l'une des revendications précédentes, et la partie de l'image animée dans laquelle se trouve l'au moins un objet étant déterminé au moyen de la position, lue dans la mémoire d'allocation, de l'au moins une caractéristique, et la partie de l'image animée dans laquelle se trouve l'objet étant remplacée par une représentation de l'objet virtuel.

13. Dispositif de traitement d'image comprenant au moins une caméra et au moins une unité de calcul,
le dispositif de traitement d'image étant conçu pour l'exécution d'un procédé selon l'une des revendications précédentes.
